# EUROPÄISCHE PATENTSCHRIFT

(11) **EP 0 699 700 B1**
(45) Veröffentlichungstag und Bekanntmachung des Hinweises auf die Patenterteilung: **19.12.2001**
(21) Anmeldenummer: 95112912.1
(22) Anmeldetag: 17.08.1995
(51) Int. Cl.: C08G 63/82, C08G 63/85, C08G 63/87, C08G 63/20, C08G 63/60

(54) **Verfahren zur Herstellung thermostabiler, farbneutraler, antimonfreier Polyester und die danach herstellbaren Produkten**
Process for the preparation of thermostable, neutral colour, antimony-free polyesters and products therefrom
Procédé pour la préparation de polyesters thermostabiles, de couleur neutre et exempts d'antimoine et produits obtenus à partir de ces polyesters

(30) Priorität: 29.08.1994 DE 4430634
(43) Veröffentlichungstag der Anmeldung: 06.03.1996
(60) Teilanmeldung: 00121946.8
(73) Patentinhaber: ARTEVA TECHNOLOGIES S.à.r.l., 8001 Zürich (CH)
(72) Erfinder: Dominguez de Walter, Ligia, Dr., D-65931 Frankfurt (DE); Moore, Banks Bryan, Dl., Spartanburg, SC 29301 (US); Klein, Peter, Dr., D-65205 Wiesbaden (DE)
(74) Vertreter: Plate, Jürgen, Dr.

(56) Entgegenhaltungen:
- FR-A- 2 419 949
- US-A- 3 962 189
- US-A- 4 983 711
- CHEMICAL ABSTRACTS, vol. 87, no. 16, 17.Oktober 1977 Columbus, Ohio, US; abstract no. 118407n, NAWATA, KIYOSHI 'Polyester manufacture' Seite 25; & JP-A-52 062 398 (TEIJIN, LTD) 23.Mai 1977

## Beschreibung

Die vorliegende Erfindung betrifft ein Verfahren zur Herstellung thermostabiler, farbneutraler, antimonfreier Polyester unter Verwendung eines Titan-Polykondensationskatalysators, das sehr gut reproduzierbar ist, eine sehr hohe Polykondensationsgeschwindigkeit auch bei sehr geringen Zusätzen des Titan-Polykondensationskatalysators aufweist und bei dem sich eine erhebliche Verminderung des thermischen Abbaus und der unkontrollierten Vernetzung des gebildeten Polyesters ergibt.

Polyester haben auf sehr vielen Anwendungsgebieten eine sehr große Bedeutung gewonnen. Insbesondere werden gesättigte Polyester für die Herstellung von Fasermaterialien aberauch von andersartigen Formkörpern, wie zum Beispiel von Getränkeflaschen, in großem Umfang eingesetzt. Für eine einwandfreie Verarbeitbarkeit dieser Polyester durch Extrusionsverfahren und für die weitere Anwendung der Extrudate, z.B. in der Textilindustrie oder Getränkeindustrie, werden sehr hohe Anforderungen an die Qualität der Polyester gestellt. Insbesondere wird gefordert, daß die verarbeitungstechnischen und anwendungstechnischen Eigenschaften von Polyestertypen für bestimmte Verarbeitungen innerhalb sehr enger Grenzen stets gleich sind. Für die Verarbeitung durch Extrusionsverfahren, z.B. durch Schmelzspinnen, ist es von ausschlaggebender Bedeutung, daß sie ein stets gleichmäßiges Molekulargewicht und eine stets reproduzierbare Molekulargewichtsverteilung aufweisen, frei sind von Gel-Anteilen, und möglichst nicht zur Vergilbung oder zu thermischem Abbau neigen. Für die Weiterverarbeitung sollten sich bei Färbeprozessen möglichst keine Katalysatormetalle aus dem Fasermaterial herauslösen, da diese durch aufwendige Reinigungsoperationen aus dem Färbereiabwasser entfernt und entsorgt werden müssen.

Auch bei der Entsorgung oder Wiederverwertung (Recyclisierung) der gebrauchten Polyestererzeugnisse sollten sich keine Schwierigkeiten durch störende Bestandteile ergeben.

Die Herstellung von Polyestern erfolgt üblicherweise durch Veresterung aromatischer Dicarbonsäuren oder Umesterung niederer aliphatischer Ester aromatischer Dicarbonsäuren mit aliphatischen Diolen und anschließende Polykondensation bis das für den geplanten Einsatz erforderliche Molekulargewicht erreicht ist.

Eine eventuelle Umesterung wird in Gegenwart von Umesterungskatalysatoren ausgeführt, die nach Abschluß der Umesterung durch Zusatz von Komplexbildnern desaktiviert werden müssen. Als Komplexbildner werden meist Phosphorsäure, phosphorige Säure und/oder Phosphonsäuren oder Derivate derselben eingesetzt.

Nach der Veresterung oder der Umesterung erfolgt die Polykondensation zu dem gewünschten Molekulargewicht, die ebenfalls in Gegenwart eines geeigneten Katalysators ausgeführt wird. Als Polykondensationskatalysator haben sich in der Großtechnik Antimonverbindungen, meist Antimontrioxid durchgesetzt. Hierbei kann es vorkommen, daß ein Teil der Antimonverbindung durch reduzierende Agenzien zu Antimonmetall reduziert wird, was zu einer Vergrauung des Polyesters führt. Daraus ergibt sich eine mangelhafte Klarheit und ein nicht neutraler Farbton.

Darüber hinaus wird der relativ hohe Gehalt der Polyester an Antimonverbindungen als ein Nachteil angesehen, da er die Herstellung verteuert. Zusätzlich besteht die Möglichkeit, daß Antimonverbindungen bei Weiterverarbeitungsverfahren, z.B. beim Färben, freigesetzt werden. Der relativ hohe Gehalt an Antimonverbindungen führt, neben der Bildung von Antimonablagerungen, zu einer Beeinflussung des Spinnverhaltens.

Es sind daher schon Vorschläge gemacht worden, die Nachteile des beschriebenen Herstellungsverfahrens zu beseitigen.

So ist es bekannt, den Farbton der Polyester durch den Zusatz von Kobaltverbindungen und/oder optischen Aufhellern zu verbessern. Es ist ferner bekannt, als Polykondensationskatalysator anstelle von Antimonverbindungen Titanverbindungen einzusetzen.

Aus verschiedenen Druckschriften, beispielsweise der US-A-3,962,189, der JP-PS-28006 (1979), derJP-PS-123311(1976), der JP-PS-43564 (1979), derJP-PS-111985 (1980) oder der JP-PS-280048 (1989) ist ein Verfahren zur Herstellung von Polyestern bekannt, bei dem zur Verbesserung des Farbtones des Polyesters eine Kobaltverbindung zugesetzt wird, die - wie der Umesterungskatalysator - vor Beginn der Polykondensation komplexiert werden muß, und bei dem die Polykondensation in Gegenwart einer Titanverbindung durchgeführt wird. Die Menge des zur Komplexierung des Kobaltzusatzes eingesetzten Komplexbildners soll nach diesen Druckschriften im Bereich von 0,5 bis 7,5 Mol pro Mol Kobaltverbindung liegen. So wird der JP-PS-28006 wird ein P/Co-Verhältnis von 0,5 bis 1,5, in der JP-PS 111985 von 0,7 bis 3, in der JP-PS-280048 von 0,5 bis 7,5 [mol/mol] angewendet.

Dieses bekannte Verfahren, hat den erheblichen Vorteil, daß alle mit der Verwendung von Antimonverbindungen verbundenen Nachteile entfallen und daß es damit tatsächlich gelingen kann, farbneutrale und klare Polyester zu erzeugen, die sich für anspruchsvolle Verarbeitungsverfahren und Anwendungen eignen. Ein Nachteil dieses bekannten Verfahrens besteht allerdings darin, daß seine Reproduzierbarkeit zu wünschen übrig läßt. So werden gelegentlich nicht die gewünschten Produkte erhalten, sondern es kommt zu Störungen der Polykondensationsreaktion, die erforderlichen Molekulargewichte werden nicht erreicht, und bei einer für erforderlich gehaltenen Verlängerung der Polykondensationsdauer kommt es zu Vergilbung des Polyesters, zur Bildung von Gel-Anteilen durch unkontrollierte Vemetzung und zur thermischen Empfindlichkeit der Produkte, die die Weiterverarbeitung erheblich beeinträchtigen. Damit sind die Vorteile, die das Verfahren an sich bietet, nicht immer realisierbar.

Es wurde nun gefunden, daß es überraschenderweise gelingt, thermostabile, farbneutrale, antimonfreie Polyester in stets reproduzierbarer Weise herzustellen, durch
a)
   (i) Veresterung aromatischer Dicarbonsäuren mit aliphatischen Diolen oder
   (ii) Umesterung niederer aliphatischer Ester aromatischer Dicarbonsäuren mit aliphatischen Diolen in Gegenwart von 20 bis 120 ppm, bezogen auf das Katalysatormetall, eines Umesterungskatalysators, der nach Abschluß der Umesterung durch Zusatz eines Komplexierungsmittels inaktiviert wird, und
b) anschließende Polykondensation in Gegenwart einer Titanverbindung als Katalysator,

Das erfindungsgemäße Verfahren ist dadurch gekennzeichnet, daß nach Abschluß der Veresterung oder Umesterung dem Veresterungs- oder Umesterungsansatz
- 100% der zu dem eingesetzten Umesterungskatalysator äquivalenten Menge und
- 90 bis 99 % der zu dem einzusetzenden Kobalt äquivalenten Menge von Phosphorsäure, phosphoriger Säure und/oder Phosphonsäuren oder einem Derivat derselben als Komplexierungsmittel und
- dann dem Ansatz 20 bis 80 ppm Kobalt in Form einer Kobaltverbindung
zugefügt werden und daß die Polykondensation ohne Antimonzusatz in Gegenwart von 1 bis 10 ppm Titan, das in Form einer Titanverbindung zugesetzt wird, ausgeführt wird.

Geeignete Umesterungskatalysatoren sind aus der Literatur bekannt. Beispielsweise eignen sich für das erfindungsgemäße Verfahren Verbindungen von Metallen der Gruppen Ia (z.B. Li,Na, K), IIa (z.B. Mg, Ca) und Vlla (z.B. Mn) des Periodensystems, insbesondere solche, die eine gewisse Löslichkeit in dem Umesterungsansatz haben, wie z.B. Salze organischer Säuren. Bevorzugt sind Salze der Gruppe Vlla, insbesondere des Mangans, mit niederen aliphatischen Karbonsäuren, insbesondere der Essigsäure.

Eine bevorzugte Ausführungsform des erfindungsgemäßen Verfahrens besteht daher darin daß eine eventuelle Umesterung in Gegenwart von 20 bis 120 ppm Mangan (gerechnet als Metall), in Form einer Manganverbindung, insbesondere von Manganazetat, ausgeführt wird.

Die zur Verbesserung des Farbtons des Polyesters zugesetzte Kobaltverbindung ist zweckmäßigerweise ebenfalls ein Salz des Kobalts mit einer organischen Säure, beispielsweise mit Essigsäure oder Adipinsäure. Die Mindestmenge der Kobaltverbindung richtet sich nach dem Ausmaß der Farbverschiebung, die im Einzelfall erforderlich ist, um einen neutralen Farbton zu erreichen. Werden zusätzlich optische Aufheller zu Farbkorrektur eingesetzt, so kann naturgemäß die Menge der Kobaltverbindung reduziert werden. In der Regel liegt die erforderliche Menge des Kobaltzusatzes, wie oben angegeben, bei maximal 50 ppm (gerechnet als Metall), stets bezogen auf das Gewicht des Polyesters. Vorzugsweise werden dem Ansatz 20 bis 40 ppm Kobalt, in Form einer Kobaltverbindung zugefügt, d.h. es wird eine solche Menge der Kobaltverbindung zugesetzt, die einer Menge von 20 bis 40 ppm freiem Kobalt entspricht.

Wie bei herkömmlichen Verfahren wird auch beim erfindungsgemäßen der Umesterungskatalysator vor Beginn der Polykondensation durch Zusatz eines Komplexbildners inaktiviert, weil andernfalls die Polykondensation behindert wird, d.h. die erforderlichen hohen Molekulargewichte der Polyester nicht erreicht werden können und darüberhinaus der erhaltene Polyester eine erhöhte Empfindlichkeit gegen thermische Belastung hat. Vereinzelt sind auch die vor der Polykondensation zugesetzten Kobaltverbindungen komplexiert worden um die thermische Stabilität der hergestellten Polyester zu verbessern.

Für das erfindungsgemäße Verfahren ist es nun wesentlich, das auf keinen Fall die gesamte zugesetzte Menge der Kobaltverbindung inaktiviert werden darf, sondern daß 1 bis 10 % der zugesetzten Kobaltverbindung unkomplexiert bleiben.

Die Menge des Komplexbildners wird daher so bemessen daß der Umesterungskatalysatorzu 100 % durch Komplexierung desaktiviert wird, aber nur 90 bis 99 % der Kobaltverbindung komplexiert werden.

Sofern das Komplexierungsvermögen eines Komplexbildners genau bekannt ist, kann man einfach 90 bis 99 % der zu der Kobaltmenge äquivalenten Menge des Komplexbildners einsetzen. In der Regel ist es jedoch zweckmäßiger, die erforderliche Menge des Komplexbildners durch Vorversuche zu ermitteln. Hierzu werden beispielsweise einige Probeansätze des Polykondensationsansatzes, die alle die gleich Zusammensetzung wie ein geplanter Hauptansatz haben, mit von etwa 80% bis 120% der theoretisch erforderlichen Menge des Komplexbildners versetzt und dann unter den gleichen Bedingungen polykondensiert.

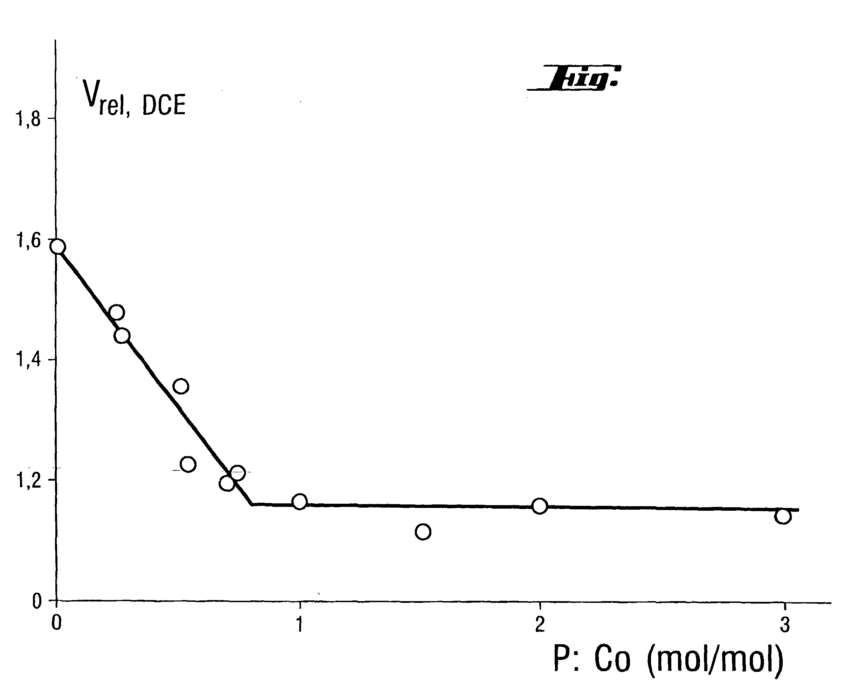

Nach Abschluß der Polykondensationsreaktion wird von allen Ansätzen die erreichte Viskosität (d.h. das erreichte Molekulargewicht) ermittelt. Die Ergebnisse einer solchen Vorversuchsreihe sind in der Figur dargestellt. Dort sind die erreichten Viskositäten gegen das Verhältnis von Komplexbildner zu Kobaltverbindung (z.B. das P/Co-Verhältnis) in einem Koordinatensystem aufgetragen. Man erkennt, daß bei einem zu hohen P/Co-Verhältnis nur geringe Viskositäten, d.h. niedrige Molekulargewichte erreicht werden können. Unterhalb einer bestimmten Grenze des P/Co-Verhältnisses steigen die erreichten Molekulargewichte an. Der Kreuzungspunkt zwischen dem flach verlaufenden und dem ansteigenden Kurvenast kennzeichnet das äquivalente P/Co-Verhältnis. Dem Hauptansatz werden dann bis zu 99 % der so ermittelten Menge des Komplexbildners zugesetzt.

Besonders vorteilhaft ist es, wenn nach Abschluß der Veresterung oder Umesterung dem Veresterungs- oder Umesterungsansatz 100 % der zu dem eingesetzten Umesterungskatalysator äquivalenten Menge und 90 bis 99 % der zu dem einzusetzenden Kobalt äquivalenten Menge von Phosphorsäure, phosphoriger Säure und/oder von Phosphonsäuren oder einem Derivat derselben als Komplexierungsmittel zugefügt wird.

Die Maßnahme, die zugesetzten Kobaltverbindungen nur teilweise zu desaktivieren, führt überraschenderweise zu einer drastischen Verbesserung der Reproduzierbarkeit des Verfahrens, es ergibt sich eine sehr hohe Polykondensationsgeschwindigkeit auch bei sehr geringen Zusätzen des Titan-Polykondensationskatalysators, eine erhebliche Verminderung des thermischen Abbaus und der unkontrollierten Vernetzung des gebildeten Polyesters mit der Konsequenz, daß keine Vergilbung und keine Gelbildung eintritt. Bei der erfindungsgemäßen Reaktionsführung kommt man daher auch mit geringeren Schönungszusätzen aus und erreicht eine einwandfrei Verarbeitbarkeit. Die erhaltenen Polyester entsprechen höchsten Qualitätsanforderungen bezüglich Klarheit und Farbneutralität.

Als Komplexbildner eignen sich für das erfindungsgemäße Verfahren grundsätzlich alle als Komplexbildner und Inaktivatoren für Umesterungskatalysatoren bekannte Verbindungen. Als besonders gut geeignet haben sich phosphorhaltige Verbindungen erwiesen, wie z.B. Phosphorsäure, Polyphosphorsäure, phosphorige Säure und Phosphonsäuren und Derivate derselben. Spezielle Beispiele für Phosphorsäure-Derivate sind die "PHM-Ester", das sind Mischungen von oxalkylierten Alkyl-hydroxyalkyl-phosphorsäureestern der Formel 1 oder Phosphonsäureester der Formel II.

O=P(OR¹)₃ (I),

worin die Reste R¹ gleiche oder verschiedene Alkyl-, Hydroxyalkyl- oder alkoxylierte Hydroxyalkylreste sind.

(R²O)₂-PO-R³-COOR⁴ (II),

worin R² und R⁴ Alkylreste sind und R³ ein Alkylenrest ist.

Als Polykondensationskatalysator werden beim erfindungsgemäßen Verfahren Titanverbindungen eingesetzt. Geeignet sind im Prinzip alle für diesen Zweck bereits beschriebenen Titanverbindungen, insbesondere Kaliumtitanyloxalat oder Titanisopropylat.

Besonders bevorzugt ist es, die Polykondensation ohne Antimonzusatz in Gegenwart von 1 bis 10 ppm Titan bis zu einer IV, gemessen in Dichloressigsäure bei 25°C, von 0,4 bis 0,9 dl/g, vorzugsweise von 0,5 bis 0,7 dl/g, und bis zu einer Carboxylgruppenkonzentration von 10 bis 50 mmol/kg, vorzugsweise von 10 bis 40 mmol/kg, in der Schmelze, und anschließend bis zu der gewünschten Endviskosität in der Festphase auszuführen.

Die Endviskosität der erfindungsgemäßen Polyester soll im Bereich von 0,7 bis 2,0 dl/g, vorzugsweise von 0,7 bis 1,5 dl/g, gemessen unter den oben angegebenen Bedingungen, liegen. Die Polykondensationsdauer und die Polykondensationstemperatur werden in bekannter Weise so reguliert, daß die gewünschte Endviskosität erreicht wird.
In der Regel wird die Polykondensation wie in der Technik der Polyesterherstellung üblich, je nach Art des Polyesters bei einer Temperatur von 260 bis 350 °C, vorzugsweise unter einem indifferenten Gas, beispielsweise unter Stickstoff, und/oder unter vermindertem Druck, der im Bereich von 0,2 bis 10 mbar, vorzugsweise von 0,4 bis 5 mbar, liegt, ausgeführt.

Zur Einstellung bestimmter Polyestereigenschaften, wie z.B. der Schmelzviskosität, kann es erwünscht sein, einen definierten Grad von Vernetzung herbeizuführen.
Zu diesem Zweck wird die Polykondensation ohne Antimonzusatz in Gegenwart von 2-8 ppm Titan und in Gegenwart von bis zu 1000 ppm, vorzugsweise von 100 bis 500 ppm, vernetzende Baugruppen liefernden organischen Verbindungen (Vernetzern) ausgeführt.

Als Vernetzer dienen Verbindungen, die mindestens drei funktionelle, zur Esterbildung befähigte Gruppen aufweisen. Zur Esterbildung befähigte funktionelle Gruppen sind die OH-Gruppe, die Carboxylgruppe, Alkoxycarbonyl, insbesondere Niederalkoxycarbonyl, die Carbonsäureanhydrid-Gruppe, und von diesen abgeleitete reaktive Gruppen. Beispiele für gängige Vernetzer sind Pentaerythrit, Trimethylolpropan, Trimellitsäure, Trimesinsäure, Pyromellitsäure u.dgl.

Zur weiteren Verbesserung des Farbtons des Polyesters und zur Einsparung eines Teils des Kobalts hat es sich als zweckmäßig erwiesen, die Polykondensation ohne Antimonzusatz in Gegenwart von bis zu 50 ppm, vorzugsweise von 5 bis 25 ppm eines optischen Aufhellers auszuführen.

Selbstverständlich ist die chemische Zusammensetzung der Polyester für deren Eigenschaften von höchster Bedeutung. Zur Herstellung von Polyestern, die für die oben genannten Einsatzzwecke geeignet sind werden unter den für das erfindungsgemäße Verfahren oben genannten Bedingungen
80 bis 100 Mol.-% aromatische Dicarbonsäuren der Formel III

   HOOC-X-COOH (III)

   oder deren niedere aliphatische Ester und
0 bis 20 Mol.-% aromatische Hydroxycarbonsäuren der Formel IV

   HO-X¹-COOH (IV)

   oder deren niedere aliphatische Ester
mit Diolen der Formel V

   HO-Y-OH (V)

   verestert oder umgeestert, wobei
X , bezogen auf die Gesamtmenge der Di- und Hydroxycarbonsäuren, zu mehr als 80 Mol.-% aromatische Reste mit 5 bis 16, vorzugsweise 6 bis 12 C-Atomen und maximal 20 Mol.-% aliphatische Reste mit 4 bis 10 Kohlenstoffatomen, vorzugsweise 6 bis 8 Kohlenstoffatomen,
X¹ , den p-Phenylenrest,
Y , bezogen auf die Gesamtmenge der um- oder veresterten Diole, zu mindestens 80 Mol.-% Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 20 Mol.-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n eine ganze Zahl von 1 bis 40 bedeutet, wobei n = 1 oder 2 für Anteile bis zu 20 Mol.-% bevorzugt sind und Gruppen mit n = 10 bis 40 vorzugsweise nur in Anteilen von unter 5 Mol.-% vorhanden sind.

Besonders bevorzugt ist es, die Auswahl der Ausgangsmaterialien so zu treffen, daß
X , bezogen auf die Gesamtmenge der Di- und Hydroxycarbonsäuren, zu 90 bis 100 Mol% p-Phenylenreste, zu 0 bis 7 Mol% m-Phenylenreste und zu 0 bis 5 Mol% aliphatische Reste mit 4 bis 10 Kohlenstoffatomen, vorzugsweise 6 bis 8 Kohlenstoffatomen
X¹ , den p-Phenylenrest,
Y , bezogen auf die Gesamtmenge der um- oder veresterten Diole, zu mindestens 90 Mol.-% Alkylen- oder Polymethylengruppen mit 2 bis 4 Kohlenstoffatomen oder Cycloalkan- oder Dimethylen-cycloalkangruppen mit 6 bis 10 C-Atomen und
zu maximal 10 Mol.-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n für die Zahlen 1 oder 2 steht, bedeutet.

Besonders bevorzugt ist es, bei dem erfindungsgemäßen Verfahren keine Hydroxycarbonsäure der Formel IV einzusetzen und die Dicarbonsäurekomponente der Formel III so zu wählen, daß X , bezogen auf die Gesamtmenge der Di- und Hydroxycarbonsäuren, zu 93 bis 99 Mol%, vorzugsweise 95 bis 98 Mol% p-Phenylenreste, zu 1 bis 7 Mol%, vorzugsweise 2 bis 5 Mol%, m-Phenylenreste bedeutet.
Die aromatischen Reste, für die X und X¹ stehen, können unsubstituiert sein oder, sofern bestimmte Eigenschaften des Polyesters modifiziert werden sollen, einen oder zwei Substituenten tragen.
Vorzugsweise sind die Reste überwiegend unsubstituiert, d.h. nicht mehr als 10 Mol% der aromatischen Reste tragen Substituenten. Der genaue Anteil substituierter Reste wird festgelegt entsprechend dem zu erzielenden Effekt.

Als Substituenten kommen vorzugsweise die Methylgruppe und die Sulfonsäuregruppe infrage.

Neben den oben genannten Ausgangsmaterialien können bis zu 10 Mol%, vorzugsweise bis zu 7 Mol% anderer cokondensierbarer Verbindungen in den Polyester einkondensiert werden, wenn bestimmte spezielle Eigenschaften gewünscht werden.
Beispielsweise können nach dem erfindungsgemäßen Verfahren schwer entflambare Polyester hergestellt werden, wenn man in den Polyester, bezogen auf die Gesamtheit der einkondensierten Dicarbonsäuren und ggf. Hydroxycarbonsäuren, 1 bis 10 Mol% der aus den DE-C-23 46 787 und 24 54 189 bekannten Verbindungen einkondensiert, die Polyesterbaugruppen der Formel VI 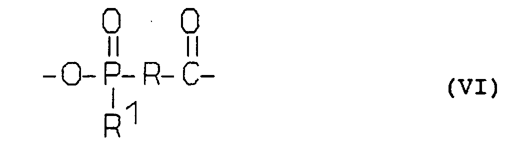 liefern, worin
- R: ein gesättigter offenkettiger oder cyclischer Alkylen-, Arylen- oder Aralkylenrest, vorzugsweise Alkan-diyl mit 2 bis 6 C-Atomen, Cycloalkan-diyl mit 6 C-Atomen, Methylenphenyl oder Phenylen, insbesondere Ethylen, und
- R¹: ein Alkylrest mit bis zu 6 C-Atomen oder ein Aryl- oder Aralkylrest, vorzugsweise Alkyl mit 1 bis C-Atomen, oder Aryl oder Aralkyl mit 6 bis 7 C-Atomen, insbesondere Methyl, Ethyl, Phenyl oder Benzyl bedeuten.

Den Veresterungs-, Umesterungs oder Polykondensationsansätzen können bis zu 10 Gew% von Modifizierungszusätzen, Füllmitteln, Pigmenten, Farbstoffen, Antioxydantien, Hydrolyse-, Licht- und Temperatur-Stabilisatoren und/oder Verarbeitungshilfsmitteln zugefügt werden, soweit diese Zusätze den Titankatalysator nicht inhibieren.
Bevorzugt ist beim erfindungsgemäßen Verfahren insbesondere der Zusatz von bis zu 10 Gew%, vorzugsweise bis zu 5 Gew.-% Polyesterstabilisatoren, die den Polyesteranteil der Mischung gegen Hydrolyse und thermischen Abbau schützen. Besonders vorteilhaft als Stabilisatoren sind solche Verbindungen, die mit endständigen Carboxylgruppen des Polyesters zu nicht sauren Endgruppen reagieren können, wie beispielsweise Glycidylether, Ketenimine, Aziridine, Isocyanate. Besonders vorteilhaft als Stabilisatoren sind Carbodiimide und Polycarbodiimide, insbesondere wenn sie in Kombination miteinander eingesetzt werden.

Die nach dem oben beschriebenen Verfahren hergestellten Polyester auf Basis aromatischer Dicarbonsäuren und aliphatischer Diole zeichnen sich dadurch aus, daß im unmattierten Zustand ihre Farbzahlkomponenten
a* im Bereich von -3 bis +3, vorzugsweise von -2 bis +2,
b* im Bereich von -6 bis +6, vorzugsweise von -3,5 bis +3,5 und
L* im Bereich von 55 bis 75, vorzugsweise von 60 bis 70 liegen.

Weiterhin ist der nach dem erfindungsgemäßen Verfahren hergestellte Polyester dadurch gekennzeichnet, daß er
- 1 bis 10 ppm: frei ist von Antimon, Titan (gerechnet als Metall),
- 20 bis 120 ppm: eines Umesterungskatalysatormetalls in Form katalytisch unwirksamer Komplexe mit Phosphorsäure, phosphoriger Säure und/oder Phosphonsäuren oder einem Derivat derselben,
- 0 bis 80 ppm: Kobalt (gerechnet als Metall), das teilweise in Form katalytisch unwirksamer Komplexe mit Phosphorsäure, phosphoriger Säure und/oder Phosphonsäuren oder einem Derivat derselben vorliegt, und
- ggf. bis zu 50 ppm: eines optischen Aufhellers enthält.

Vorzugsweise ist der nach dem erfindungsgemäßen Verfahren hergestellte Polyester frei von Antimon und enthält
- 2 bis 8 ppm: Titan (gerechnet als Metall),
- 50 bis 90 ppm: Mangan (gerechnet als Metall) in Form katalytisch unwirksamer Komplexe mit Phosphorsäure, phosphoriger Säure und/oder Phosphonsäuren oder einem Derivat derselben,
- 20 bis 40 ppm: Kobalt, das teilweise in Form katalytisch unwirksamer Komplexe mit Phosphorsäure, phosphoriger Säure und/oder Phosphonsäuren oder einem Derivat derselben vorliegt, und
- ggf. bis zu 25 ppm: eines optischen Aufhellers.

Weiterhin ist es bevorzugt, daß 90 bis 99 % des Kobalts in Form katalytisch unwirksamer Komplexe mit Phosphorsäure, phosphoriger Säure und/oder Phosphonsäuren oder einem Derivat derselben, vorliegen und/oder daß der Polyester 5 bis 25 ppm eines optischen Aufhellers enthält.

Die katalytisch unwirksamen Komplexe des Umesterungskatalysators, vorzugsweise des Mangans, und des Kobalts können im Prinzip alle für die Inaktivierung dieser Metalle bekannten Komplexbildner enthalten. Bevorzugt sind die katalytisch unwirksamen Komplexe des Umesterungskatalysators, insbesondere des Mangans und Kobalts mit Phosphorsäure, Polyphosphorsäure oder insbesondere phosphoriger Säure oder einem Derivat, insbesondere einem Ester dieser Säuren.

Von besonderer Bedeutung für die Gesamtheit der technischen Merkmale ist natürlich auch die Struktur der Polyesterkette. Rein qualitativ ist zu sagen, daß sie aus den in bekannten faserbildenden Polyestern üblichen Baugruppen aufgebaut ist. Überwiegend, d.h. zu mindestens 80 Mol-%, bestehen sie aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist. Vorzugsweise enthalten modifizierte Polyester mindestens 80 Mol-% Ethylenterephthalat-Einheiten. Die restlichen 20 Mol-% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der aus den Polyestern hergestellten Erzeugnisse, wie z.B. Filamente und Verpackungsmaterialien (z.B. Getränkeflaschen), gezielt zu beeinflussen. Beispiele für solche Dicarbonsäureeinheiten sind Reste der Isophthalsäuren oder von aliphatischen Dicarbonsäure wie z.B. Glutarsäure, Adipinsäure, Sebazinsäure; Beispiele für modifizierend wirkende Diolreste sind solche von längerkettigen Diolen, z.B. von Propandiol oder Butandiol, von Di- oder Tri-ethylenglycol oder, sofem in geringer Menge vorhanden, von Polyglycol mit einem Molgewicht von ca. 500- 2000.

Im einzelnen sind Polyester bevorzugt, deren Polymerketten aus 80 bis 100 Mol-% Baugruppen der Formel VII 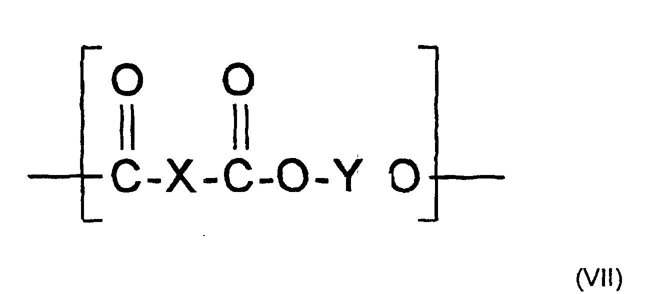 und 20 bis 0 Mol-% Baugruppen der Formel VIII 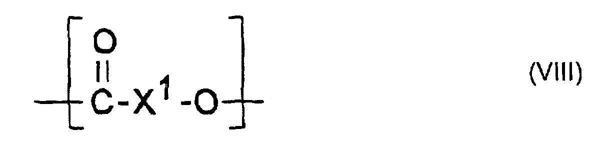 aufgebaut sind, worin
- X: zu mehr als 80 Mol-% aromatische Reste mit 5 bis 16, vorzugsweise 6 bis 12 C-Atomen und maximal 20 Mol-% aliphatische Reste mit 4 bis 10 Kohlenstoffatomen, vorzugsweise 6 bis 8 Kohlenstoffatomen,
- X¹: den p-Phenylenrest,
- Y: zu mindestens 80 Mol-% Alkylen- oder Polymethylengruppen mit 2 bis 4 Kohlenstoffatomen oder Cycloalkan- oder Dimethylen-cycloalkangruppen mit 6 bis 10 C-Atomen und zu maximal 20 Mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n eine ganze Zahl von 1 bis 40 bedeutet, wobei n = 1 oder 2 für Anteile bis zu 20 Mol-% bevorzugt sind und Gruppen mit n = 10 bis 40 vorzugsweise nur in Anteilen von unter 5 Mol-% vorhanden sind.

Besonders bevorzugt sind Polyester, die aus Baugruppen der Formel IV bestehen worin
- X: zu 90 bis 100 Mol-% p-Phenylenresten, zu 0 bis 7 Mol-% m-Phenylenreste und zu 0 bis 5 Mol-% aliphatische Reste mit 4 bis 10 Kohlenstoffatomen, vorzugsweise 6 bis 8 Kohlenstoffatomen und
- Y: zu mindestens 90 Mol-% Alkylen- oder Polymethylengruppen mit 2 bis 4, Kohlenstoffatomen oder Cycloalkan- oder Dimethylen-cycloalkangruppen mit 6 bis 10 C-Atomen und zu maximal 10 Mol-% geradkettiges oder verzweigtes Alkandiyl mit 4 bis 16, vorzugsweise 4 bis 8, C-Atomen oder Reste der Formel -(C₂H₄-O)ₙ-C₂H₄-, worin n für die Zahlen 1 oder 2 steht, bedeuten.

Insbesondere sind solche Polyester bevorzugt, die aus Baugruppen der Formel IV bestehen, worin X zu 93 bis 99 mol-% p-Phenylenreste und zu 1 bis 7 Mol-% m-Phenylenreste bedeutet.

Häufig ist es zweckmäßig, einen definierten Vernetzungsgrad des Polyesters einzustellen. In diesen Fällen ist es bevorzugt, daß der Polyester bis zu 1000 ppm der oben angegebenen vemetzenden Baugruppen enthält.

Zweckmäßigerweise haben die durch Schmelze-Polykondensation hergestellten Polyester eine intrinsische Viskosität (IV) von 0,600 bis 0,900 gemessen in Dichloressigsäure bei 25°C.

Vorzugsweise enthalten Polyester, die Baugruppen der Formel VIII aufweisen, 70 bis 100 Mol-% ,insbesondere 85 bis 100 Mol-%, Baugruppen der Formel VII und 0 bis 30 Mol-%, insbesondere 0 bis 15 Mol-%, Baugruppen der Formel VIII.

Die aromatischen Reste, für die X steht, können im Rahmen der gegebenen Definition alle gleich sein oder sie können verschieden sein. Insbesondere können die oben genannten, von X repräsentierten Baugruppen, die zu mindestens 80 Mol-% die Polyesterkette bilden, einzeln oder gemischt in der Polyesterkette vorliegen. Bevorzugt ist es, wenn die mindestens 80 Mol-% der Polyesterkette von nur einem oder zwei Individuen aus der Gruppe der für diese Hauptkomponenten angegebenen Reste gebildet werden. Eine eventuell gewünschte weitere Modifizierung der Polyesterkette erfolgt dann vorzugsweise durch andere Baugruppen im Rahmen der Definition, die für die zu maximal 20 Mol-% vorhandenen, von X repräsentierten Baugruppen gegeben worden ist.

So können die mindestens 80 Gew.-% aromatischen Reste beispielsweise alle 1,4-Phenylenreste sein oder sie können sich beispielsweise im Molverhältnis von 95:5 bis 99:1 aus 1,4- und 1,3-Phenylenresten oder im Molverhältnis von 4:6 bis 6:4 aus 2,6-Naphthylenresten und Biphenyl-4,4'-diyl-Resten zusammensetzen. Bevorzugt sind Polyester, in denen X mindestens 95 Mol-% aromatische und maximal 5 Mol-% aliphatische Reste bedeuten, insbesondere aber solche, in denen X ausschließlich für aromatische Reste steht.

Auch die Reste, für die Y steht, können im Rahmen der gegebenen Definition alle gleich sein oder sie können verschieden sein. Insbesondere können die oben genannten, von Y repräsentierten Baugruppen, die zu mindestens 80 Mol-% die Polyesterkette bilden, einzeln oder gemischt in der Polyesterkette vorliegen. Bevorzugt ist es, wenn die mindestens 80 Mol-% der Polyesterkette von nur einem oder zwei Individuen aus der Gruppe der für diese Hauptkomponenten angegebenen Reste gebildet werden.

Eine eventuell gewünschte weitere Modifizierung der Polyesterkette erfolgt dann vorzugsweise durch andere Baugruppen im Rahmen der Definition, die für die zu maximal 20 Mol-% vorhandenen, von Y repräsentierten Baugruppen gegeben worden ist. So können die mindestens 80 Gew.-% aliphatischen Reste beispielsweise alle. Ethylenreste sein oder sie können sich beispielsweise im Molverhältnis von 10:1 bis 1:10 aus Ethylen und 1,4-Dimethylen-cyclohexan-Resten zusammensetzen. Besonders bevorzugt sind Polyester, in denen Y mindestens 95 Mol-% Ethylen-Reste sind.

Bevorzugte aromatische Reste, für die X steht sind 1,4- und 1,3-Phenylen. Geeignete Reste sind aber auch 1,4-, 1,5-, 1,8-, 2,6- und 2,7-Naphthylen, 4,4'-Biphenylen, Furylen und Reste der Formel IX 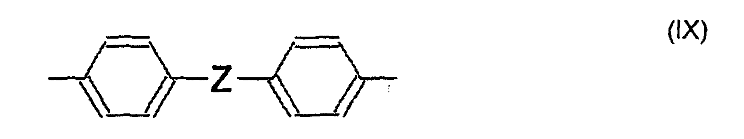 worin Z Polymethylen oder Alkylen mit 1 bis 4 Kohlenstoffatomen, -SO₂-, -COO-, -O- oder -S- bedeutet.

Die aromatischen Reste, für die X steht, können ihrerseits noch einen oder zwei Substituenten tragen. In diesem Fall ist es jedoch bevorzugt, daß nur ein Anteil von bis zu 15 %, insbesondere von bis zu 7 % der vorhandenen aromatischen Reste substituiert ist. Vorzugsweise tragen die substituierten aromatischen Reste jeweils nur einen Substituenten. Besonders geeignete Substituenten sind Alkyl mit 1 bis 4 C-Atomen, Alkoxy mit 1 bis 4 C-Atomen, Chlor und die Sulfogruppe.

Reste, die sich von aliphatischen Dicarbonsäuren ableiten, und aromatische Reste, die gewinkelte Ketten liefern, beispielsweise Isophthalsäurereste, oder die sperrigere aromatische Kerne, wie den Naphthalinkern aufweisen, sowie die längerkettigen, für Y stehenden Baugruppen werden insbesondere dann in die Polyesterkette eingebaut, wenn eine Modifizierung der Eigenschaften des Polyesters erwünscht ist. Bevorzugt sind Polyester, die weniger als 7 % dieser modifizierend wirkenden Komponenten enthalten.

Zur Erzielung spezieller Gebrauchseigenschaften dient z.B. der Einbau von Sulfogruppen enthaltenden Bausteinen (z.B. Sulfo-isophthalsäure) in den Polyester, der dadurch eine Affinität zu basischen Farbstoffen erhält oder der Einbau von Baugruppen der oben angegebenen Formel VI, der zu schwer entflammbaren Polyestem führt.

### Beispiel 1a

Ein Umesterungsreaktorwird mit 9,75 kg Dimethylterephthalat, 0,25 kg Dimethylisophthalat, 6 kg Ethylenglycol und 3 g Manganacetat 4 H₂O (68 ppm Mangan, bezogen auf Polyester) beschickt und die Mischung unter Rühren und unter Stickstoff als Schutzgas auf 140°C erwärmt. Die Reaktionstemperatur wird im Verlauf von 4 Stdn. auf 230°C gesteigert und das abgespaltene Methanol und der Ethylenglycol-Überschuß abdestilliert. Anschließend wird das geschmolzene Reaktionsprodukt in ein Polykondensationsgefäß überführt, mit 1,65 g (165 ppm) H₃PO₃ als Komplexbildner, und 1,27 g (127 ppm) Kobaltacetat (entspr. 30 ppm Co) versetzt und 10 bis 15 Minuten bei 230 °C gerührt. Danach werden 0,27 g (27 ppm) Kaliumtitanyloxalat (entspr. 3,6 ppm Ti) zugesetzt und der Ansatz unter Stickstoff bei 240°C gerührt, wobei unter leichtem Vakuum Ethylenglycol abdestilliert wird. Dann wird der Innendruck im Verlauf von einer Stunde auf 1,13 mbar gesenkt und dabei die Temperatur der Schmelze von 240 auf 270°C erhöht. Im Verlauf einer weiteren halben Stunde wird dann die Temperatur auf 280 °C gesteigert und dabei solange weitergerührt, bis eine Probe der Schmelze eine spezifische Lösungsviskosität, gemessen in einer Lösung von 1 g der Schmelze in 100 ml Dichloressigsäure bei 25 °C, von 0,83 aufweist.

Altemativ und bequemer kann die Polykondensation auch bis zu einer bestimmten Schmelzviskosität fortgeführt werden, wenn in Vorversuchen die Schmelzviskosität bei 280 °C ermittelt wurde, die der Lösungsviskosität von 0,83 entspricht.

Die Schmelze wird abgekühlt und in üblicher Weise zu Pellets mit einem Durchmesser von 2 bis 3 mm verarbeitet. Der so erhaltene Polyester hat folgende Kennzahlen:
Gehalt an Carboxylgruppen [mmol/kg]: 12
Gehalt an Diethylenglycol [%]: 0,5
Farbzahlen: L* = 63,44; a* = -0,62; b* = 3,09

Der so hergestellte Polyester kann durch Feststoffkondensation noch weiter kondensiert werden. Zu diesem Zweck werden die oben hergestellten Pellets in üblicher Weise unter langsamer Durchmischung im Vakuum oder unter Stickstoff 17 Stunden auf 220 °C erhitzt. Man erhält so einen Polyester mit einer, wie oben gemessenen, spezifischen Viskosität von 1,014.

### Beispiele 1b bis 1I

Das obige Beispiel wurde mehrfach in der in Beispiel 1a beschriebenen diskontinuierlichen Weise (Beispiele 1j bis 1l) oder analog in kontinuierlichem Betrieb (Beispiele 1b bis 1i) wiederholt, wobei die Menge des Kobaltzusatzes, die Art und Menge des Komplexbildners, sowie Art und Menge des Titan-Katalysators abgeändert wurde und in einigen Fällen zusätzlich ein kommerzieller optischer Aufheller (® HOSTALUX KS der Hoechst AG) oder ein Vernetzer (Pentaerythrit) zugesetzt wurde. Bei der Polykondensation in der Schmelze wurde unter verschiedenen Drucken und mit variierten Reaktionszeiten gearbeitet und bei der Feststoffkondensation wurden Kondensationsdauer und -Temperatur variiert.

Die Zusammensetzung der Ansätze und die Reaktionsbedingungen, soweit sie variiert wurden, die Farbzahlen, sowie die erreichte spezifische Viskosität und der Gehalt der Polyester an Carbonsäuregruppen und Diglycol sind in den folgenden Tabellen 1 und 2 angegeben worden.

Die in den Tabellen benutzten Abkürzungen haben folgende Bedeutungen:
KTi = Kalium-Titanyloxalat
Tiip = Isopropyltitanat
Co(AcO)₂-4 H₂O = Kobaltacetat-tetrahydrat
PO₃ = phosphorige Säure
PO₄ = Phosphorsäure
PPA = Polyphosphorsäure
PHM = PHM-Ester
HLX=®HOSTALUX KS
Penta = Pentaerythrit
SV = spezifische Viskosität;
[COOH] Carboxyl-Endgruppen-Konzentration
DEG = Konzentration von Diethylenglycol

Alle ppm-Angaben beziehen sich auf die Menge des bei dem Ansatz theoretisch zu erhaltenden Polyesters. Sofern der Zusatz eine Metallverbindung ist (z.B. Katalysator), bedeutet die Nennung des Verbindungskürzels, daß die ppm-Angabe die Menge der Verbindung bezeichnet, sofern das Metallsymbol angegeben ist, bedeutet die ppm-Angabe die Menge des in dem Zusatz enthaltenen Metalls.

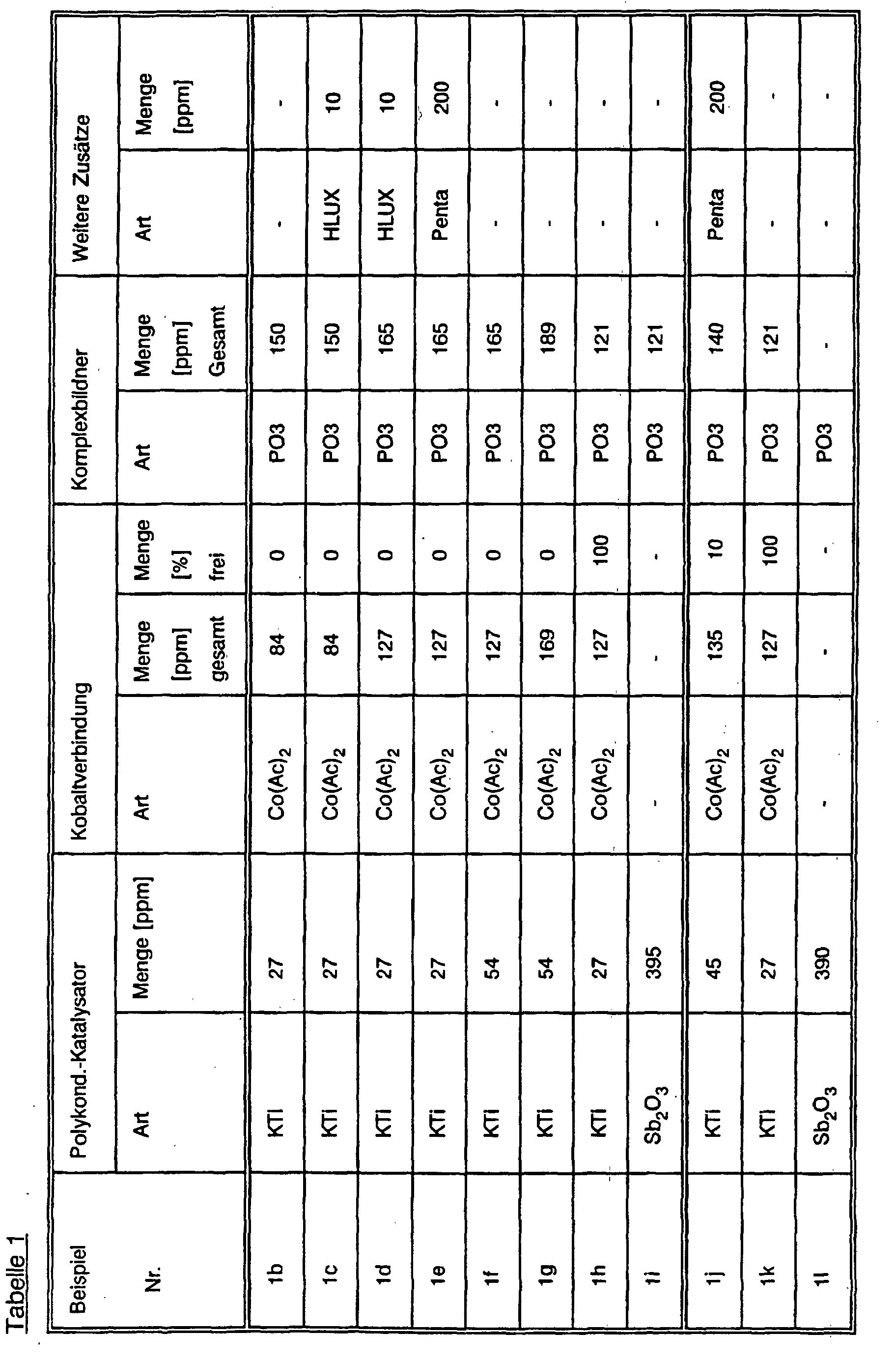

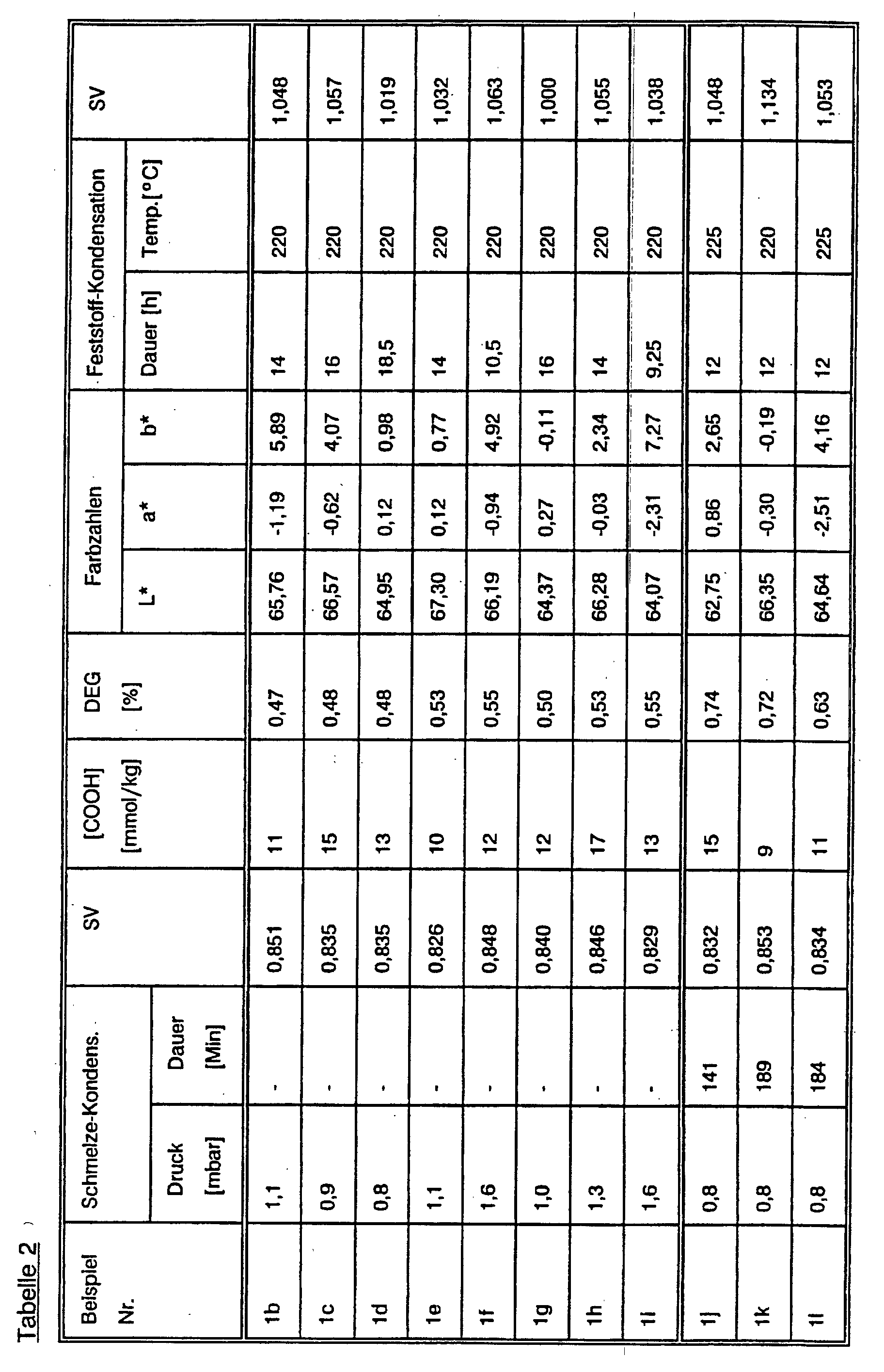

### Beispiel 2

Das folgende Ausführungsbeispiel veranschaulicht die Herstellung eines Polyesters durch Direktveresterung:
Ein Veresterungsreaktor wird mit 8,29 kg Terephthalsäure, 0,124 kg Isophthalsäure und 4,0 kg Ethylenglycol beschickt und die Mischung unter Rühren und unter Stickstoff als Schutzgas unter einem Druck von 3,2 bar so erwärmt, daß das abgespaltene Wasser abdestilliert.
Wenn die Wasserabspaltung beendet ist wird das geschmolzene Reaktionsprodukt in ein Polykondensationsgefäß überführt, mit 0,35 g (32 ppm) H₃PO₃ als Komplexbildner, und 1,47 g (135 ppm) Kobaltacetat-tetrahydrat (entspr. 32 ppm Co) versetzt.

Danach werden 0,49 g (45 ppm) Kaliumtitanyloxalat (entspr. 6,1 ppm Ti) zugesetzt und der Ansatz unter Stickstoff bei 240°C gerührt, wobei unter leichtem Vakuum Ethylenglycol abdestilliert wird.
Dann wird der Innendruck im Verlauf von einer Stunde auf 1,13 mbar gesenkt und dabei die Temperatur der Schmelze von 240 auf 270°C erhöht. Im Verlauf einer weiteren halben Stunde wird dann die Temperatur auf 280 °C gesteigert und dabei solange weitergerührt, bis eine Probe der Schmelze eine spezifische Lösungsviskosität, gemessen in einer Lösung von 1 g der Schmelze in 100 ml Dichloressigsäure bei 25 °C, von 0,83 aufweist.
Die Schmelze wird abgekühlt und in üblicher Weise zu Pellets mit einem Durchmesser von 2 bis 3 mm verarbeitet.
Der so erhaltene Polyester hat folgende Kennzahlen:

| | |
|---|---|
| Gehalt an Carboxylgruppen [mmol/kg] | 13 |
| Gehalt an Diethylenglycol [%] | 1,19 |
| Farbzahlen | L* = 63,6; a* = 1,90; b* = -1,5 |

Der so hergestellte Polyester kann durch Feststoffkondensation noch weiter kondensiert werden.
Hierzu werden die oben hergestellten Pellets unter langsamer Durchmischung unter Stickstoff oder im Vakuum 9,5 Stunden auf 220 °C erhitzt. Man erhält so einen Polyester mit einer, wie oben gemessenen, spezifischen Viskosität von 1,087.

In analoger Weise, mit den aus den Tabellen 3 und 4 ersichtlichen Bedingungen, können weitere Polyester hergestellt werden. Die Produkte haben die aus Tabelle 4 ersichtlichen Merkmale.

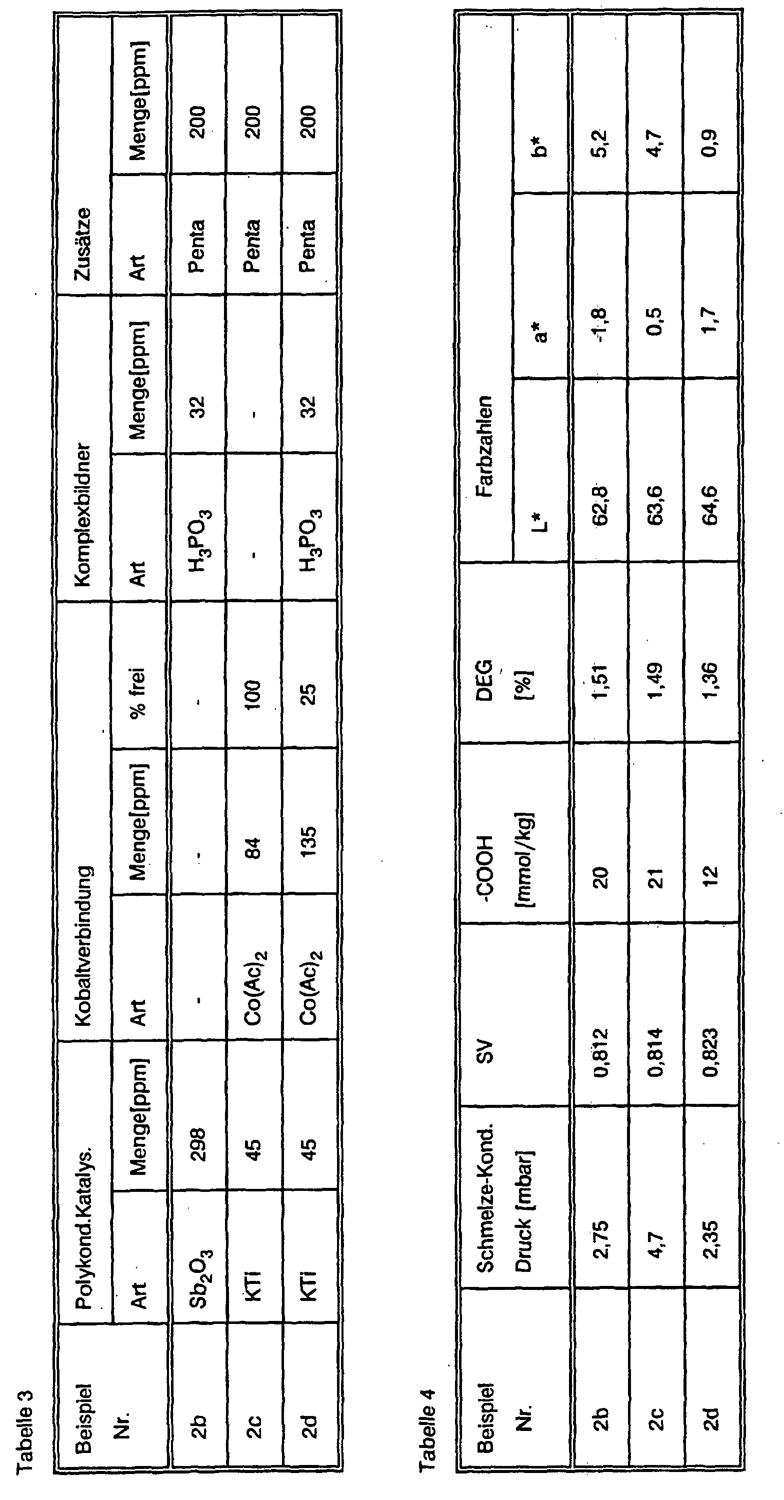

## Patentansprüche

1. Verfahren zur Herstellung thermostabiler, farbneutraler, antimonfreier Polyester durch
a)
(i) Veresterung aromatischer Dicarbonsäuren mit aliphatischen Diolen oder
(ii) Umesterung niederer aliphatischer Ester aromatischer Dicarbonsäuren mit aliphatischen Diolen in Gegenwart von 20 bis 120 ppm, bezogen auf das Katalysatormetall, eines Umesterungskatalysators, der nach Abschluß der Umesterung durch Zusatz eines Komplexierungsmittels inaktiviert wird, und
b) anschließende Polykondensation in Gegenwart einer Titanverbindung als Katalysator,
**dadurch gekennzeichnet, daß** nach Abschluß der Veresterung oder Umesterung dem Veresterungs- oder Umesterungsansatz
- 100% der zu dem eingesetzten Umesterungskatalysator äquivalenten Menge und
- 90 bis 99 % der zu dem einzusetzenden Kobalt äquivalenten Menge von Phosphorsäure, phosphoriger Säure und/oder Phosphonsäuren oder einem Derivat derselben als Komplexierungsmittel und
- dann dem Ansatz 20 bis 80 ppm Kobalt in Form einer Kobaltverbindung
zugefügt werden und daß die Polykondensation ohne Antimonzusatz in Gegenwart von 1 bis 10 ppm Titan, das in Form einer Titanverbindung zugesetzt wird, ausgeführt wird.

2. Verfahren gemäß Anspruch 1, **dadurch gekennzeichnet, daß** die Polykondensation in Gegenwart von bis zu 1.000 ppm, bevorzugt 100 bis 500 ppm, vemetzende Baugruppen liefernden organischen Verbindung, bevorzugt Pentaerythrit, Trimethylolpropan, Trimellitsäure, Trimesinsäure oder Pyromellitsäure, ausgeführt wird.

3. Verfahren gemäß Anspruch 1 oder 2, **dadurch gekennzeichnet, daß** die Polykondensation in Gegenwart von bis zu 50 ppm, bevorzugt bis zu 25 ppm, eines optischen Aufhellers ausgeführt wird.

4. Verfahren gemäß mindestens einem der Ansprüche 1 bis 3, **dadurch gekennzeichnet, daß** die Polykondensation bis zu einer intrinsischen Viskosität (IV), gemessen in Dichloressigsäure bei 25 °C, von 0,4 bis 0,9 dl/g, bevorzugt 0,5 bis 0,7 dl/g, und bis zu einer Carboxylgruppenkonzentration von 10 bis 50 mmol/kg in der Schmelze, und anschließend bis zu der gewünschten Endviskosität in der Festphase ausgeführt wird.

5. Verfahren gemäß mindestens einem der Ansprüche 1 bis 4, **dadurch gekennzeichnet, daß** dem Ansatz 20 bis 40 ppm Kobalt in Form einer Kobaltverbindung zugefügt werden.

6. Verfahren gemäß mindestens einem der Ansprüche 1 bis 5, **dadurch gekennzeichnet, daß** die Polykondensation in Gegenwart von 2 bis 8 ppm Titan ausgeführt wird.

7. Verfahren zur Herstellung thermostabiler, farbneutraler, antimonfreier Polyester durch
(i) Veresterung aromatischer Dicarbonsäuren oder Hydroxycarbonsäuren mit aliphatischen Diolen oder
(ii) Umesterung niederer aliphatischer Ester aromatischer Dicarbonsäuren oder Hydroxycarbonsäuren mit aliphatischen Diolen in Gegenwart von 20 bis 120 ppm, bezogen auf das Katalysatormetall, eines Umesterungskatalysators, der nach Abschluß der Umesterung durch Zusatz eines Komplexierungsmittels inaktiviert wird, und anschließende Polykondensation in Gegenwart einer Titanverbindung als Katalysator, **dadurch gekennzeichnet, daß**
| | |
|---|---|
| 80 bis 100 mol-% | Dicarbonsäuren der Formel (III) HOOC-X-COOH oder deren niedere aliphatische Ester und |
| 0 bis 20 mol-% | aromatische Hydroxycarbonsäuren der Formel (IV) HO-X¹-COOH oder deren niedere aliphatische Ester |
mit Diolen der Formel (V) HO-Y-OH verestert oder umgeestert werden, wobei
X zu mehr als 80 mol-%, bezogen auf die Gesamtmenge der Dicarbonsäuren und Hydroxycarbonsäuren, aromatische Reste mit 5 bis 16 C-Atomen und maximal 20 Mol-% aliphatische Reste mit 4 bis 10 C-Atomen,
X¹ den p-Phenylenrest und
Y zu mindestens 80 Mol-%, bezogen auf die Gesamtmenge der umgeesterten oder veresterten Diole, Alkylen- oder Polymethylengruppen mit 2 bis 4 C-Atomen oder Cycloalkan- oder Dimethylen-cycloalkangruppen mit 6 bis 10 C-Atomen und zu maximal 20 Mol-% geradkettiges oder verzweigtes Alkandiyl mit 4 bis 16 C-Atomen oder Reste der Formel -(C₂H₄-O)ₙ-C₂H₄-, worin n eine ganze Zahl von 1 bis 40 ist,
bedeutet, und daß nach Abschluß der Veresterung oder Umesterung dem Veresterungs- oder Umesterungsansatz
- 100% der zu dem eingesetzten Umesterungskatalysator äquivalenten Menge und
- 90 bis 99 % der zu dem einzusetzenden Kobalt äquivalenten Menge von Phosphorsäure, phosphoriger Säure und/oder Phosphonsäuren oder einem Derivat derselben als Komplexierungsmittel und
- dann dem Ansatz 20 bis 80 ppm Kobalt in Form einer Kobaltverbindung
zugefügt werden und daß die Polykondensation ohne Antimonzusatz in Gegenwart von 1 bis 10 ppm Titan, zugesetzt in Form einer Titanverbindung, ausgeführt wird.

8. Verfahren gemäß Anspruch 7, **dadurch gekennzeichnet, daß** die aromatischen Reste X 6 bis 12 C-Atome, die aliphatischen Reste X 6 bis 8 C-Atome und/oder das geradkettige oder verzweigte Alkandiyl Y 4 bis 8 C-Atome enthalten und daß für Anteile bis zu 20 mol-% bevorzugt n = 1 oder 2 ist und Gruppen mit n = 10 bis 40 vorzugsweise nur in Anteilen von unter 5 mol-% vorhanden sind.

9. Verfahren gemäß Anspruch 7, **dadurch gekennzeichnet, daß**
| | | |
|---|---|---|
| X | zu 90 bis 100 mol-% | p-Phenylenreste, |
| | zu 0 bis 7 mol-% | m-Phenylenreste und |
| | zu 0 bis 5 mol-% | aliphatische Reste mit 4 bis 10, vorzugsweise 6 bis 8 C-Atomen, |
jeweils bezogen auf die Gesamtmenge der Di- und Hydroxycarbonsäuren,
X¹ den *p*-Phenylenrest,
Y zu mindestens 90 mol-% Alkylen- oder Polymethylengruppen mit 2 bis 4 C-Atomen oder Cycloalkan- oder Dimethylen-cycloalkan gruppen mit 6 bis 10 C-Atomen und zu maximal 10 mol-% geradkettiges oder verzweigtes Alkandiyl mit 4 bis 16, vorzugsweise 4 bis 8 C-Atomen oder Reste der Formel -(C₂H₄-O)ₙ-C₂H₄-, worin n für die Zahlen 1 oder 2 steht, bezogen auf die Gesamtmenge der um- oder veresterten Diole,
bedeutet.

## Claims

1. Process for the preparation of heat-stable, antimony-free polyesters of neutral color by
a)
(i) esterification of aromatic dicarboxylic acids with aliphatic diols or
(ii) transesterification of lower aliphatic esters of aromatic dicarboxylic acids with aliphatic diols in the presence of 20 to 120 ppm, based on the catalyst metal, of a transesterification catalyst which is inactivated after completion of the esterification step by adding a complexing agent, and
b) subsequent polycondensation in the presence of a titanium compound as a catalyst,
**characterized in that** after completion of the esterification or transesterification step phosphoric acid, phosphorous acid and/or phosphonic acids or a derivative thereof are added to the esterification or transesterification batch in an amount which is
- 100% equivalent to the amount of the transesterification catalyst employed and
- 90 to 99% equivalent to the amount of the cobalt to be employed,
- and, subsequently, 20 to 80 ppm of cobalt are added to the batch in the form of a cobalt compound,
and that the polycondensation is carried out, without addition of antimony, in the presence of 1 to 10 ppm of titanium, which is added in the form of a titanium compound.

2. Process as claimed in claim 1, **characterized in that** the polycondensation is carried out in the presence of up to 1,000 ppm, preferably 100 to 500 ppm, of organic compounds which provide crosslinking structural groups, pentaerythritol, trimethylol propane, trimellitic acid, trimesic acid or pyromellitic acid being preferred compounds.

3. The process as claimed in claim 1 or 2, **characterized in that** the polycondensation is carried out in the presence of up to 50 ppm, preferably up to 25 ppm, of an optical brightener.

4. The process as claimed in at least one of claims 1 to 3, **characterized in that** the polycondensation is carried out in the melt until an intrinsic viscosity (IV) of 0.4 to 0.9 dl/g, preferably 0.5 to 0.7 dl/g, determined in dichloroacetic acid at 25°C, and a carboxylic group concentration of 10 to 50 mmol/kg is reached, and subsequently in the solid phase until the desired final viscosity is reached.

5. The process as claimed in at least one of claims 1 to 4, **characterized in that** 20 to 40 ppm of cobalt in the form of a cobalt compound are added to the batch.

6. The process as claimed in at least one of claims 1 to 5, **characterized in that** the polycondensation is carried out in the presence of 2 to 8 ppm of titanium.

7. Process for the preparation of heat-stable, antimony-free polyesters of neutral color by
(i) esterification of aromatic dicarboxylic acids or hydroxycarboxylic acids with aliphatic diols or
(ii) transesterification of lower aliphatic esters of aromatic dicarboxylic acids or hydroxycarboxylic acids with aliphatic diols carried out in the presence of 20 to 120 ppm, based on the catalyst metal, of a transesterification catalyst which is inactivated after completion of the transesterification step by adding a complexing agent, and subsequent polycondensation in the presence of a titanium compound acting as a catalyst,
**characterized in that**
| | |
|---|---|
| 80 to 100 mol-% | of dicarboxylic acids of the formula (III) HOOC-X- COOH or lower aliphatic esters thereof and |
| 0 to 20 mol% | of aromatic hydroxycarboxylic acids of the formula (IV) HO-X¹-COOH or lower aliphatic ester thereof |
are esterified or transesterified with a diol of the formula (V) HO-Y-OH, wherein
more than 80 mol-% of the X radicals, relative to the total amount of the dicarboxylic and hydroxycarboxylic acids, represent aromatic radicals having 5 to 16 carbon atoms, and up to 20 mol-% of the X radicals represent aliphatic radicals having 4 to 10 carbon atoms,
X¹ is para-phenylene radical,
at least 80 mol-% of the Y radicals, based on the total amount of transesterified or esterified diols, represent alkylene or polymethylene groups having 2 to 4 carbon atoms or represent cycloalkane or dimethylene-cycloalkane groups having 6 to 10 carbon atoms, and up to 20 mol-% of the Y radicals represent straight-chain or branched alkanediyl groups having 4 to 16 carbon atoms or represent radicals of the formula -(C₂H₄-O)ₙ-C₂H₄-, in which n is an integer from 1 to 40, and that after completion of the esterification or transesterification step phosphoric acid, phosphorous acid and/or phosphonic acids or a derivative thereof are added as a complexing agent to batch in an amount which is
- 100% equivalent to the amount transesterification catalyst employed and
- 90 to 99% equivalent to the amount of cobalt to be employed
- and, subsequently, 20 to 80 ppm of cobalt in the form of a cobalt compound are added to the batch,
and that the polycondensation is carried out, without addition of antimony, in the presence of 1 to 10 ppm of titanium, which is added in the form of a titanium compound.

8. The process as claimed in claim 7, **characterized in that** the aromatic radicals X contain 6 to 12 carbon atoms, the aliphatic radicals X contain 6 to 8 carbon atoms and/or the straight-chain or branched alkanediyl radicals Y contain 4 to 8 carbon atoms, where n is preferably 1 or 2 when the straight-chain or branched alkanediyl radicals Y are present in an amount of up to 20 mol%, where radicals Y in which n = 10 to 40 are preferably present only in amounts of less than 5 mol-%.

9. The process as claimed in claim 7, **characterized in that**
| | | |
|---|---|---|
| 90 to | 100 mol-% | of the X radicals denote *para*-phenylene radicals, |
| 0 to | 7 mol-% | of the X radicals denote *meta*-phenylene radicals and |
| 0 to | 5 mol-% | of the X radicals denote aliphatic radicals having 4 to 10, preferably 6 bis 8 carbon atoms, |
in each case based on the total amount of dicarboxylic and hydroxycarboxylic acids,
X¹ denotes *para*-phenylene radical,
at least 90 mol-%, based on the total amount of transesterified or esterified diols, of the Y radicals denote alkylene or polymethylene groups having 2 to 4 carbon atoms or cycloalkane or dimethylene-cycloalkane groups having 6 to 10 carbon atoms and at most 10 mol-% of the Y radicals denote straight-chain or branched alkanediyl groups having 4 to 16, preferably 4 to 8, carbon atoms or denote radicals of the formula -(C₂H₄-O)ₙ-C₂H₄-, in which n is 1 or 2.

## Revendications

1. Procédé pour la préparation de polyesters thermostables, exempts d'antimoine, de couleur neutre par
a)
(i) estérification d'acides dicarboxyliques aromatiques avec des diols aliphatiques ou
(ii) transestérification d'acides dicarboxyliques aromatiques d'esters aliphatiques inférieurs avec des diols aliphatiques en présence de 20 à 120 ppm, par rapport au métal catalyseur, d'un catalyseur de transestérification qui est désactivé après l'achèvement de l'étape d'estérification en ajoutant un complexant, et
b) par polcondensation ultérieure en présence d'un composé du titane en tant que catalyseur,
**caractérisé en ce qu'**après l'achèvement de l'étape d'estérification ou de transestérification, de l'acide phosphorique, de l'acide phosphoreux et/ou des acides phosphoniques ou un de leurs dérivés sont ajoutés au lot d'estérification ou de transestérification en une quantité qui est
- 100% équivalente à la quantité de catalyseur de transestérification utilisée et
- 90 à 99% équivalente à la quantité de cobalt devant être utilisée,
- et, par la suite, 20 à 80 ppm de cobalt sont ajoutées au lot sous forme d'un composé du cobalt,
et **en ce que** la polycondensation est réalisée, sans addition d'antimoine, en présence de 1 à 10 ppm de titane, qui est ajouté sous forme d'un composé du titane.

2. Procédé selon la revendication 1, **caractérisé en ce que** la polycondensation est réalisée en présence d'une quantité maximale de 1 000 ppm, de préférence de 100 à 500 ppm, de composés organiques qui fournissent des groupes structuraux de réticulation, le pentaérythritol, le trimethylolpropane, l'acide trimellique, l'acide trimésique ou l'acide pyromellique étant les composés préférés.

3. Procédé selon la revendication 1 ou 2, **caractérisé en ce que** la polycondensation est réalisée en présence d'une quantité maximale de 50 ppm, de préférence de 25 ppm, d'un azurant optique.

4. Procédé selon au moins l'une des revendications 1 à 3, **caractérisé en ce que** la polycondensation est réalisée en fusion jusqu'à ce qu'une viscosité intrinsèque (VI) de 0,4 à 0,9 dl/g, de préférence de 0,5 à 0,7 dl/g, déterminée dans l'acide dichloroacétique à une température de 25°C, et à une concentration en groupes carboxyliques de 10 à 50 mmol/kg, soit atteinte, et par la suite en phase solide jusqu'à ce que la viscosité finale souhaitée soit atteinte.

5. Procédé selon au moins l'une des revendications 1 à 4, **caractérisé en ce que** 20 à 40 ppm de cobalt sous forme d'un composé du cobalt sont ajoutées au lot.

6. Procédé selon au moins l'une des revendications 1 à 5, **caractérisé en ce que** la polycondensation est réalisée en présence de 2 à 8 ppm de titane.

7. Procédé pour la préparation de polyesters thermostables, exempts d'antimoine, de couleur neutre par
(i) estérification d'acides dicarboxyliques aromatiques ou d'acides hydroxycarboxyliques avec des diols aliphatiques ou
(ii) transestérification d'esters aliphatiques inférieurs d'acides dicarboxyliques avec des diols aliphatiques réalisée en présence de 20 à 120 ppm, par rapport au métal catalyseur, d'un catalyseur de transestérification qui est désactivé après achèvement de l'étape de transestérification en ajoutant un complexant, et polycondensation ultérieure en présence d'un composé du titane agissant en tant que catalyseur,
**caractérisé en ce que**
80 à 100% mol d'acides dicarboxyliques de formule (III) HOOC-X-COOH ou d'esters aliphatiques inférieurs de ceux-ci et
0 à 20% mol d'acides hydroxycarboxyliques de formule (IV) HO-X¹-COOH ou d'esters aliphatiques inférieurs de ceux-ci
sont estérifiés ou transestérifiés avec un diol de formule (V) HO-Y-OH,
dans lesquels
plus de 80% mol des radicaux X, par rapport à la quantité totale d'acides dicarboxyliques et hydroxycarboxyliques, représentent des radicaux aromatiques ayant 5 à 16 atomes de carbone, et jusqu'à 20% mol des radicaux X représentent des radicaux aliphatiques ayant 4 à 10 atomes de carbone,
X¹ est un radical para-phénylène,
au moins 80% mol des radicaux Y, par rapport à la quantité totale de diols transestérifiés ou estérifiés, représentent des groupes d'alkylène ou polyméthylène ayant 2 à 4 atomes de carbone ou représentent des groupes cycloalcane ou diméthylène-cycloalcane ayant 6 à 10 atomes de carbone, et jusqu'à 20% mol des radicaux Y représentent des groupes alcanediyl linéaires ou ramifiés ayant 4 à 16 atomes de carbone ou représentent des radicaux de formule -(C₂H₄-O)ₙ-C₂H₄-, où n est un nombre entier compris entre 1 et 40,
et **en ce qu'**après l'achèvement de l'étape d'estérification ou de transestérification, de l'acide phosphorique, de l'acide phosphoreux et/ou des acides phosphoniques ou un de leurs dérivés sont ajoutés au lot en tant que complexant en une quantité qui est
- 100% équivalente à la quantité de catalyseur de transestérification utilisée et
- 90 à 99% équivalente à la quantité de cobalt devant être utilisée
- et, par la suite, 20 à 80 ppm de cobalt sous forme d'un composé du cobalt sont ajoutées au lot,
et **en ce que** la polycondensation est réalisée, avec ou sans addition d'antimoine, en présence de 1 à 10 ppm de titane, qui est ajouté sous forme d'un composé du titane.

8. Procédé selon la revendication 7, **caractérisé en ce que** les radicaux aromatiques X contiennent 6 à 12 atomes de carbone, les radicaux aliphatiques X contiennent 6 à 8 atomes de carbone et/ou les radicaux Y alcanediyl linéaires ou ramifiés contiennent 4 à 8 atomes de carrbone, où n est de préférence 1 ou 2 lorsque les radicaux Y alcanediyl linéaires ou ramifiés sont présents en une quantité maximale de 20% mol, les radicaux Y dans lesquels n = 10 à 40 étant de préférence présents seulement en des quantités inférieures à 5% mol.

9. Procédé selon la revendication 7, **caractérisé en ce que**
90 à 100% mol des radicaux X sont des radicaux paraphénylène,
0 à 7% mol des radicaux X sont des radicaux métaphénylène et
0 à 5% mol des radicaux X sont des radicaux aliphatiques ayant 4 à 10, de préférence 6 à 8 atomes de carbone,
dans chaque cas, on se base sur la quantité totale d'acides dicarboxyliques et hydroxycarboxyliques,
X¹ est un radical para-phénylène,
au moins 90% mol, par rapport à la quantité totale de diols estérifiés ou transestérifiés, des radicaux Y sont des groupes d'alkylène ou polyméthylène ayant 2 à 4 atomes de carbone ou des groupes cycloalcane ou diméthylène-cycloalcane ayant 6 à 10 atomes de carbone et au plus 10% mol des radicaux Y sont des groupes alcanédiyl linéaires ou ramifiés ayant 4 à 16, de préférence 4 à 8, atomes de carbone ou sont des radicaux de formule -(C₂H₄-O)ₙ-C₂H₄-, dans laquelle n est 1 ou 2.
